(19) **Europäisches Patentamt / European Patent Office / Office européen des brevets**

(11) **EP 1 760 134 A1**

(12) # EUROPEAN PATENT APPLICATION

(43) Date of publication:
**07.03.2007 Bulletin 2007/10**

(51) Int Cl.:
*C09K 11/08* (2006.01)    *C09K 11/77* (2006.01)
*B42D 15/00* (2006.01)

(21) Application number: **06018084.1**

(22) Date of filing: **30.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.08.2005  US 216718**

(71) Applicant: **Petrik, Viktor Ivanovich**
**Sankt Petersburg 195426 (RU)**

(72) Inventor: **Petrik, Viktor Ivanovich**
**Sankt Petersburg 195426 (RU)**

(74) Representative: **PATENTSERVIS Praha, a.s.**
**Jivenská 1273/1**
**14021 Praha 4 (CZ)**

(54) **White-flourescent anti-strokes compositions and methods for identification and protection of excise labels, bank notes, securities, documents and products**

(57)    Compositions and methods for materials with substantially white anti-stokes fluorescence are presented. In especially preferred aspects, such materials are employed in safety marks to help protect and/or validate authenticity. Remarkably, while contemplated materials have an apparent white fluorescence from batch to batch, spectral footprints of such materials are irreproducible among batches. Therefore, contemplated materials will lend themselves as particularly valuable tools for authentication as the materials *per se* are uniquely distinct among distinct batches of manufacture.

EP 1 760 134 A1

## Description

## Field of The Invention

The field of the invention is compositions and methods for anti-stokes (up-converting) fluorescent materials, and especially as they relate to authentication of documents and labels marked with such materials.

## Background of The Invention

Anti-stokes fluorescence is a well known effect of certain materials in which incident light of a lower wavelength is absorbed by a material and then emitted after up-conversion as fluorescence light of a shorter wavelength. Among various other materials, especially useful anti-stokes materials include those in which an inorganic matrix (*e.g.,* oxides, fluorides, oxysulfides, oxychlorides, etc.) include Yttrium as a matrix component to thereby form a rare earth metal-containing inorganic matrix (e.g., $Y_2O_3$-YOF, $YF_3$, $Y_2O_2S$, YOCl, etc.), which in almost all cases further includes a sensitizer and an activator.

In currently known anti-stokes materials, the rare earth metal in the matrix (i.e., the rare earth metal matrix component) is typically yttrium, ytterbium, or lanthanum, while the sensitizer is most typically a single type of rare earth metal (e.g., ytterbium or erbium) and the activator is another single type of rare earth metal (e.g., erbium or thulium). Typically, the color of the anti-stokes fluorescence will depend on the particular choice of the activator. For example, $Y_2O_2S$:Yb, Er (Y as rare earth metal matrix component, Yb as sensitizer, and Er as activator, both present in the crystal lattice at low concentration) will exhibit green fluorescence, while $Y_2O_2S$:Yb, Tm (Y as rare earth metal matrix component, Yb as sensitizer, and Tm as activator, both present in the crystal lattice at low concentration) will exhibit blue fluorescence. Thus, the presently known anti-stoked materials have the general formula $A_nO_2S$:$X_mY_q$ with A, X, and Y being rare earth metals, n being 1 or 2, and m and q being independently between 0 and 1.

Such materials have found a range of applications in numerous fields, including life sciences (see e.g., U.S. Pat. App. No. 2005/0014283, or U.S. Pat. No. 6,312,914, both of which are incorporated by reference herein), document security (see e.g., U.S. Pat. No. 6,841,092), and color image displays (see e.g., U.S. Pat. App. No. 2004/0227694 or 2004/0232826). While these known anti-stokes materials provide several advantages over previously known material, several drawbacks nevertheless remain. Among other things, all or almost all of the currently known anti-stokes materials are chemically unstable over a prolonged period. Moreover, due to the relatively defined chemical nature of these materials, fluorescence emission is limited to a single color (e.g., blue or red). Worse yet, where such known anti-stokes materials are used, the spectral footprint can be relatively easily repeated once the chemical composition is known (e.g., using energy dispersive electron microscopy), thus severely limiting the usefulness for security related applications.

Therefore, while numerous compositions and methods for anti-stokes materials are known in the art, all or almost all of them suffer from one or more problems. Thus, there is still a need for new compositions and methods for such materials, and especially for those having substantially white fluorescence.

## Summary of the Invention

The present invention is directed to compositions and methods related to materials having substantially white anti-stokes fluorescence. Such materials are most preferably employed in safety marks to authenticate an article (*e.g.*, security document, identification card, bank note, excise label, etc.), but other uses are also contemplated

In one aspect of the inventive subject matter, a safety mark comprises a material having substantially white anti-stokes fluorescence. Most typically, contemplated materials will have a formula of $E_nO_2S : G_{m1}, J_{m2}, L_{m3}, Q_{m4}, X_{m5}, Y_{m6}$, wherein E is Y, La, or Yb, and G is Er or Yb, J, L, Q, X, and Y are independently cerium, erbium, europium, dysprosium, gadolinium, lutetium, lanthanum, praseodymium, promethium, terbium, or thulium, n is 1 or 2, m1 is between 1 and 25 mass %, and m2, m3, m4, m5, and m6 are independently between 0 and 1 mass %. Preferably, suitable materials include those in which E is Y, and G is Yb, and/or those in which J, L, Q, X, and Y are independently erbium, europium, dysprosium, gadolinium, and thulium.

Depending on the particular use of the safety mark, the material is disposed in a paper, a fabric, a dye, a natural or synthetic polymer, a metal, a metal alloy, and/or cellular structure. It is especially pointed out that a spectral footprint of the substantially white anti-stokes fluorescence from a first batch is irreproducible in a second batch of the same material. However, and despite the irreproducibility of a particular spectral footprint, it is contemplated that the substantially white anti-stokes fluorescence has within a spectral range of between 450 nm and 700 nm a maximum emission peak with an emission intensity of $E_{max}$, and that at least 30% (more typically 45%, and most typically at least 55%) of the spectral range is covered by a plurality of additional peaks having a fluorescence intensity of at least 0.5 times $E_{max}$. Where desirable, contemplated safety marks may further include (at the same or a different site, separate or in admixture) a second material having a colored anti-stokes fluorescence. For example, second materials may have blue, red, and/or green fluorescence.

In another aspect of the inventive subject matter, a method of protecting authenticity of an article will comprise a step of labeling the article with contemplated safety marks. For example, the safety mark may be applied by printing the safety mark on the article (e.g., in an lithographic process, or hand-written ink), incorporating the safety mark into at least part of the article (e.g., admixing the material into a carrier), and/or direct application of the material onto at least part of the article. In especially preferred aspects, the article is associated with a spectral footprint of the substantially white anti-stokes fluorescence of the safety mark, and where desirable, a second material having a colored anti-stokes fluorescence may be applied or included into the article.

In a further aspect of the inventive subject matter, a method of verifying authenticity of an article comprises a step of irradiating the article with infrared light and registering substantially white anti-stokes fluorescence. It should be noted that the step of registering may be performed with a hand-held infrared laser, and that the step of registering will then typically include visual detection of the substantially white anti-stokes fluorescence. On the other hand, the step of registering may also comprise spectral analysis of the substantially white anti-stokes fluorescence to thereby obtain a spectral footprint, wherein the footprint may then be correlated with a spectral footprint in a database (which may or may not include information about the article).

Various objects, features, aspects and advantages of the present invention will become more apparent from the following detailed description of preferred embodiments of the invention, along with the accompanying drawing.

## Brief Description of the Drawing

Figure 1A is a fluorescence emission spectrum of one known anti-stokes material with apparent red color.

Figure 1B is a fluorescence emission spectrum of another known anti-stokes material with apparent blue color.

Figure 1C is a fluorescence emission spectrum of one known anti-stokes material with apparent green color.

Figure 2 is a fluorescence emission spectrum of the anti-stokes material according to the inventive subject matter with substantially white fluorescence.

## Detailed Description

The inventors have discovered that various inorganic matrices that contain a plurality of rare earth metals will exhibit substantially white anti-stokes fluorescence. Remarkably, such white fluoresce is not the additive effect of an admixture of small particles having red, green, and blue anti-stokes fluorescence, but the anti-stokes fluorescence of individual particles. Thus, and viewed from another perspective, it should be noted that each particle is comprised of a material that emits substantially white light.

Even more remarkably, the inventors surprisingly discovered that the spectral footprint of the substantially white fluorescence between particles of individual batches significantly differed, and that spectral footprints using such materials were found to be irreproducible, even where all reasonable efforts were undertaken. While not wishing to be bound by any specific theory or hypothesis, it is generally contemplated that such irreproducibility is due to the random spatial distribution of the rare earth metal activators in the lattice with respect to the rare earth metal sensitizer(s) and/or rare earth metal matrix component in the same lattice.

The term "material having substantially white anti-stokes fluorescence" as used herein refers to any chemically uniform material (as opposed to a mixture or combination of different materials) having a single structural formula that exhibits upon irradiation with infrared light (*i.e.,* light with a wavelength of between 800 nm and 2000 nm) substantially white anti-stokes fluorescence. Therefore, a chemically uniform and isolated material according to the inventive subject matter (which may or may not be part of a composition) will fall within the scope of this definition so long as such material will exhibit substantially white anti-stokes fluorescence. In contrast, a mixture of multiple and chemically distinct materials (*e.g.,* a mixture of three distinct anti-stokes materials having red, green, and blue anti-stokes fluorescence, respectively) is specifically excluded from the scope of this definition.

As also used herein, the term "substantially white anti-stokes fluorescence" refers to emitted light of a material in response to irradiation of the compound with infrared light, wherein the emitted light can be characterized as having within a continuous spectral range of between 450 nm and 700 nm a maximum emission peak with an emission intensity of $E_{max}$, and wherein at least 30% (more typically at least 45%, and most typically at least 55%) of that spectral range is occupied by a plurality of additional emission peaks having a fluorescence intensity of at least 0.5 times $E_{max}$. In one example, and viewed from another perspective, all or almost all of the shades of the substantially white fluorescence will appear on a color display using an RGB color representation of 256 bits per red (R), green (G), and blue (B) channel as a color represented in a space in which each of R, G, and B have independently a value of between 245 and 255 (e.g., R-249, G-252, B-250), inclusive.

In one preferred aspect of the inventive subject matter, an ink composition was formed using commercially available fountain pen ink (e.g., Pelikan ink, Royal Blue Art Brown, 2 West 46th Street, New York, NY 10036) and substantially white fluorescent anti-stokes material having the formula of $Y_2O_2S : Yb_{10}$, $Er_{0.003}$, $Eu_{0.03}$, $Dy_{0.15}$, $Gd_{0.13}$, $Tm_{0.12}$ (e.g., commercially available from SupraCarbonic, 348 N. Eckhoff Street - Orange, CA 92868, USA; numerals for sensitizer and activator are mass%). The concentration of the substantially white fluorescent anti-stokes material was about 5 mg per ml of ink, which was applied to various materials (e.g., personal check paper, letter paper, baseball, wood, etc.) using a regular fountain pen.

In another preferred aspect of the inventive subject matter, a composition was formed using a 10 wt% glycerol/water mixture to which was added the substantially white fluorescent anti-stokes material described above. The concentration of the substantially white fluorescent anti-stokes material was about 5 mg per ml of fluid, which was transferred onto a stamp pad. A rubber stamp was then used to apply the solution to various materials (e.g., personal check paper, letter paper, baseball, wood, etc.) to thereby leave after drying a mark that was invisible to the unaided eye without IR irradiation.

In both examples above, substantially white fluorescence was visually observed upon irradiation of the anti-stokes material using a hand-held diode laser having a wavelength of 980 nm and an output of 10 mW (e.g., using Lasermate Group LTG98012AH). In both cases, the substantially white fluorescence was bright, and visible to the unaided eye, and could be generated from an amount of as little as 50 micrograms. Further analysis of the spectral footprint of the substantially white fluorescent material (e.g., using Jasco FP-6500) surprisingly showed that different batches of the fluorescent material had individual spectral footprints, which could not be reproduced. For example, while some batches had a maximum peak at about 476 nm, and secondary peaks (i.e., at least 80% of $E_{max}$) at 549 nm, 626 nm, and 652 nm, other batches had a maximum peak 553 nm with secondary peaks at 474 nm and 648 nm. Therefore, it should be noted that use of such material provides a unique manner of labeling and authenticating an article that is marked with such material.

With respect to the material having substantially white anti-stokes fluorescence, it should be noted that suitable materials need not be limited to the exemplary composition above, but that alternative materials are also deemed suitable. Among other compositions, it is generally preferred that the material will include an inorganic matrix, which contains a rare earth matrix component, and at least five, and more typically six to eight rare earth metals that together act as sensitizer(s) and activators. Suitable matrices particularly include oxysulfides, but oxides, fluorides, and/or oxychlorides are also contemplated herein. Similarly, suitable rare earth matrix components may vary considerably. However, it is most typically preferred that the rare earth matrix component is yttrium, ytterbium, and/or lanthanum. Preferred sensitizer(s) and activators will be selected from rare earth metals, and especially include cerium, erbium, europium, dysprosium, gadolinium, thulium, lanthanum, praseodymium, promethium, terbium, and lutetium. Thus, and among other preferred compounds, the substantially white fluorescing compositions will have yttrium or ytterbium as rare earth metal matrix component, ytterbium as sensitizer, and at least three, and more typically at least four or five (or even more) distinct rare earth metals as activators, wherein the activators, sensitizers, and rare earth matrix component(s) are selected such that incident infrared light is up-converted to substantially white light.

Therefore, most typical substantially white fluorescing compositions will have a chemical composition of formula $E_nO_2S : G_{m1}J_{m2}, L_{m3}, Q_{m4}, X_{m5}, Y_{m6}$ with E being Y or Yb, G being Er or Yb, and J, L, Q, X, and Y being independently selected from the group consisting of erbium, europium, dysprosium, gadolinium, lanthanum, lutetium, praseodymium, promethium, terbium, and thulium, n being 1 or 2, and m1 is between 1 and 25 mass %, more preferably between 5 and 15 mass%, and even more preferably between 8 and 12 mass%. m2, m3, m4, m5, and m6 are independently between 0 and 1 mass %, more typically between 0.0005 and 0.5 mass%, and most typically between 0.001 and 0.3 mass%.

In further especially preferred aspects, E is Y, and G is Yb, and where desirable, J, L, Q, X, and Y are independently selected from the group consisting of erbium, europium, dysprosium, gadolinium, and thulium, typically at the amounts as indicated above. Consequently, such materials can also be characterized as having a substantially white anti-stokes fluorescence that has, within a continuous spectral range of between 450 nm and 700 nm, a maximum emission peak with an emission intensity of $E_{max}$, wherein at least 30% (more typically at least 45%, and most typically at least 55%) of the spectral range is covered by a plurality of additional peaks having a fluorescence intensity of at least 0.5 times $E_{max}$.

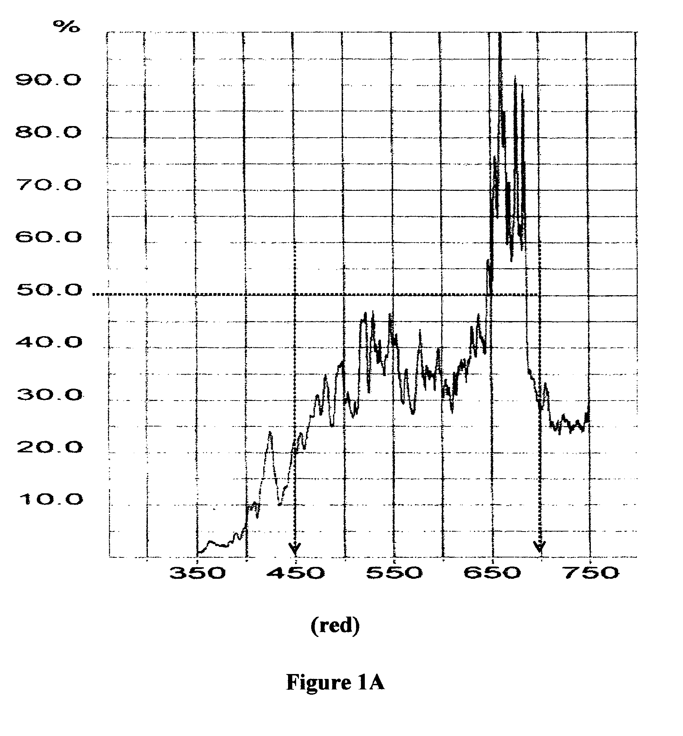

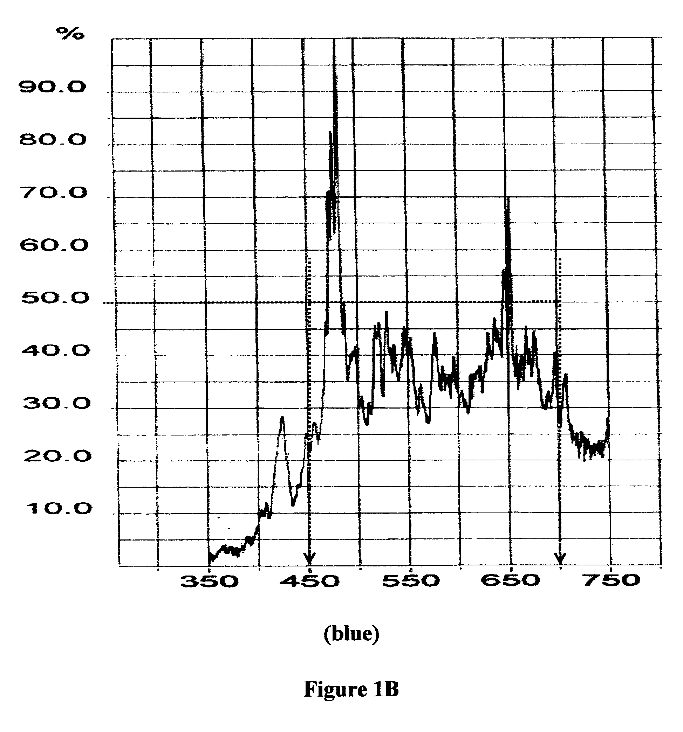

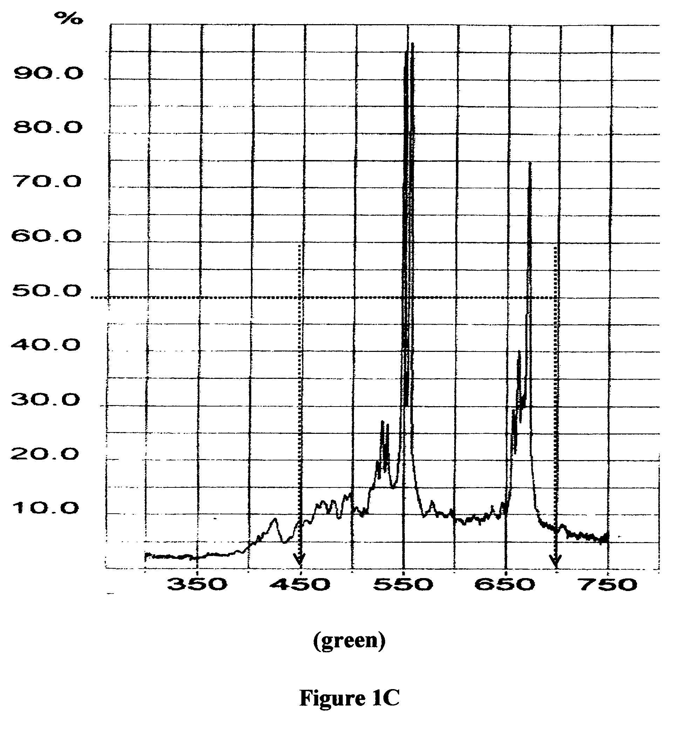

**Figures 1A-1C** depict exemplary emission spectra of known anti-stokes compounds having red, blue, and green fluorescence, respectively. Clearly, each of the spectra has within the continuous spectrum of between 450 nm and 700 nm emission maxima that correspond to the respective colors of the fluorescence. In each of the spectra, the vertical dotted lines depict the end points of the continuous spectral range, while the dotted horizontal line depicts an emission intensity of 50% $E_{max}$, wherein $E_{max}$ is characterized as the maximum fluorescence emission within the continuous spectral range. For example, in the red fluorescent material of Figure 1A, $E_{max}$ is found in the red area of the spectrum at about 660 nm, while in the blue fluorescent material of Figure 1B, $E_{max}$ is found in the blue area of the spectrum at about 485 nm. $E_{max}$ at those peaks is then set to 100%, and 50% $E_{max}$ is determined accordingly.

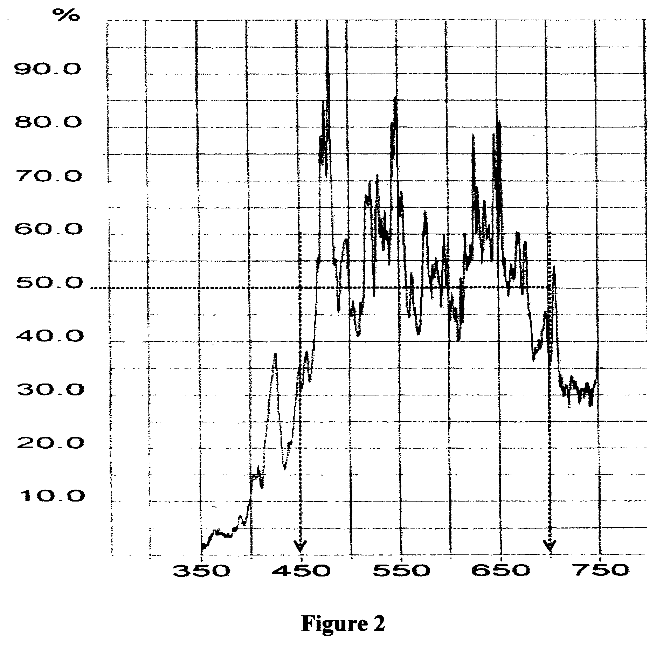

In contrast, and as is readily apparent from **Figure 2,** the exemplary emission spectrum of one substantially white fluorescing composition covers substantially the entire spectral range with more than 62% of the continuous spectrum covered by a plurality of peaks having at least 50% of $E_{max}$. Viewed from a different perspective, at more than 62% of the wavelengths found in the continuous spectrum of between 450 nm and 700 nm, emitted light had an intensity of at least 50% of $E_{max}$. Not

surprisingly, such emission was perceived as substantially white light. Depending on the particular chemical composition, it should be noted that varying degrees of colored hues may be imparted However, the exact spectral characteristics were found to be irreproducible (all spectra were obtained at an excitation wavelength of about 980 nm).

In still further contemplated aspects, it should be appreciated that the substantially white fluorescing compounds may also be based at least in part on an organic carrier, which bind (*e.g.,* in complex, ionic interaction, or other manner) one or more rare earth metals in predetermined positions relative to each other. For example, suitable organic carriers and/or chelators are described in U.S. Pat. App. No. 2004/0227694 or 2004/0232826, which are incorporated by reference herein. In such materials, it is typically preferred that a plurality of chemically distinct rare earth metals are in proximity to each other. For example, one molecule may provide more than one (e.g., two, three, or more) binding or coordination sites for rare earth metals.

With respect to the irradiation, it is generally preferred that excitation is in the infrared range of the spectrum, and most typically between 900 nm and 1000 nm. However, and in less preferred aspects, irradiation may also include visible light or even ultraviolet light (i.e., less than 380 nm). It is further preferred that the irradiation light provides the light in a relatively narrow band, and most preferably as laser light. However, polychromatic IR (ad other) light is also expressly contemplated For example, where an article is labeled and a field test is desired, irradiation may be performed with a hand-held IR laser using energies of less than 10 mW at a wavelength of 908 nm, 930 nm, or 980 nm. On the other hand, and especially where spectral analysis is performed to identify a particular footprint, a fluorometer may be used at a fixed, and/or variable wavelength excitation. Consequently, emission spectra expressly include 2-dimensional footprints (*i.e.,* emission spectrum obtained by excitation at a fixed wavelength) and 3-dimensional footprints (i.e., emission spectrum obtained by excitation at variable wavelengths).

It should be appreciated that the substantially white fluorescent materials according to the inventive subject matter can be combined with any material in nay manner. For example, contemplated articles to be labeled include bank and security notes, excise labels, magnetic and optical data storage media, documents for personal identification, drugs, biological structures, fashion merchandise, textiles, etc. Therefore, and among numerous other materials, suitable materials include paper, fabric, dye, natural and/or synthetic polymers, metals, metal alloys, cellular structure, etc. Thus, and depending on the particular article and/or material, it should be recognized that the substantially white fluorescent material can be applied in various manners, including liquid preparations (i.e., substantially white fluorescent material in a liquid carrier), dry preparations, (e.g., direct application of powder or in a solid carrier [e.g., in transparent polymer or glass]), and all reasonable combinations thereof Consequently, the manner of application will depend on the formulation and article. For example, where an autograph is to be authenticated, ink comprising the fluorescent materials may be written from a fountain pen. On the other hand, where the applied safety mark should be invisible to the unaided eye, the mark may be stamped, soaked in, or otherwise applied (with or without carrier). In further contemplated aspects, the mark may also be embedded in a transparent plastic that is then employed as a laminated cover over a document. Additionally, it should be recognized that the safety mark may further include anti-stokes materials with colored (e.g., red, green, and/or blue) fluorescence emission to further enhance resistance to forgery, wherein the second colored anti-stokes materials may be present in the same or different location.

Thus, contemplated substantially white fluorescing materials are most preferably used as a safety mark to label, authenticate, and/or verify a particular article. In most cases, information about that article may be associated to provide verification. For example, such information may be available to selected personnel (e.g., customs or law enforcement), or only available to a single recipient. Typically, and especially where a spectral footprint is associated with a mark (and with that with an article), it is contemplated that at least part of such information is located in a remote database. Thus, also contemplated are methods of protecting authenticity of an article, wherein that article is labeled with the substantially white fluorescing material. Similarly, methods of verifying authenticity of an article are contemplated in which the substantially white fluorescence is registered (e.g., visually using a hand-held IR laser, or with a detector, and most typically with fluorometer) upon irradiation with infrared radiation.

Thus, specific embodiments and applications of white-fluorescent anti-stokes compositions and methods have been disclosed. It should be apparent, however, to those skilled in the art that many more modifications besides those already described are possible without departing from the inventive concepts herein. The inventive subject matter, therefore, is not to be restricted except in the spirit of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Furthermore, where a definition or use of a term in a reference, which is incorporated by reference herein is inconsistent or contrary to the definition of that term provided herein, the definition of that term provided herein applies and the definition of that term in the reference does not apply.

**Claims**

1. A safety mark comprising a material having substantially white anti-stokes fluorescence.

2. The safety mark of claim 1 wherein the material has a formula of :

$$E_nO_2S : G_{m1}, J_{m2}, L_{m3}, Q_{m4}, X_{m5}, Y_{m6}$$

wherein E is Y, La, or Yb, and G is Er or Yb;
wherein J, L, Q, X, and Y are independently selected from the group consisting of cerium, erbium, europium, dysprosium, gadolinium, lanthanum, lutetium, praseodymium, promethium, terbium, and thulium; and
wherein n is 1 or 2, m1 is between 1 and 25 mass %, and m2, m3, m4, m5, and m6 are independently between 0 and 1 mass %.

3. The safety mark of claim 2 wherein E is Y, and G is Yb.

4. The safety mark of claim 3 wherein J, L, Q, X, and Y are independently selected from the group consisting of erbium, europium, dysprosium, gadolinium, and thulium.

5. The safety mark of claim 1 wherein the material is disposed in at least one of a paper, a fabric, a dye, a natural or synthetic polymer, a metal, a metal alloy, and cellular structure.

6. The safety mark of claim 1 wherein a spectral footprint of the substantially white anti-stokes fluorescence from a first batch is irreproducible in a second batch of the same material.

7. The safety mark of claim 1 wherein the substantially white anti-stokes fluorescence has within a spectral range of between 450 nm and 700 nm a maximum emission peak with an emission intensity of $E_{max}$, and wherein at least 30% of the spectral range is covered by a plurality of additional peaks having a fluorescence intensity of at least 0.5 times $E_{max}$.

8. The safety mark of claim 1 wherein the substantially white anti-stokes fluorescence has within a spectral range of between 450 nm and 700 nm a maximum emission peak with an emission intensity of $E_{max}$, and wherein at least 45% of the spectral range is covered by a plurality of additional peaks having a fluorescence intensity of at least 0.5 times $E_{max}$.

9. The safety mark of claim 1 wherein the substantially white anti-stokes fluorescence has within a spectral range of between 450 nm and 700 nm a maximum emission peak with an emission intensity of $E_{max}$, and wherein at least 55% of the spectral range is covered by a plurality of additional peaks having a fluorescence intensity of at least 0.5 times $E_{max}$.

10. The safety mark of claim 1 further comprising a second material having a colored anti-stokes fluorescence.

11. The safety mark of claim 10 wherein the colored anti-stokes fluorescence is selected from blue fluorescence, red fluorescence, and green fluorescence.

12. A method of protecting authenticity of an article comprising a step of labeling the article with the safety mark of claim 1.

13. The method of claim 12 wherein the step of labeling comprises a step selected from the group consisting of printing the safety mark on the article, incorporating the safety mark into at least part of the article, and direct application of the safety mark onto at least part of the article.

14. The method of claim 12 further comprising a step of associating the article with a spectral footprint of the substantially white anti-stokes fluorescence of the safety mark.

15. The method of claim 12 further comprising a step of labeling the article with a second material having a colored anti-stokes fluorescence.

16. A method of verifying authenticity of an article comprising a step of irradiating the article with infrared light and registering substantially white anti-stokes fluorescence.

17. The method of claim 16 wherein the step of irradiating is performed with a hand-held infrared laser, and wherein the step of registering comprises visual detection of the substantially white anti-stokes fluorescence.

18. The method of claim 16 wherein the step of registering comprises spectral analysis of the substantially white anti-stokes fluorescence to thereby obtain a spectral footprint.

19. The method of claim 18 wherein the spectral footprint is correlated with a spectral footprint in a database.

20. The method of claim 19 wherein the database further includes information about the article.

(red)

**Figure 1A**

(blue)

**Figure 1B**

(green)

Figure 1C

**Figure 2**

**European Patent Office**

**EUROPEAN SEARCH REPORT**

Application Number

EP 06 01 8084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/39392 A (RIEDEL DE HAEN GMBH [DE]; WIECZORECK JUERGEN [DE]; SIGGEL ALFRED [DE];) 11 September 1998 (1998-09-11) * page 4, line 22 through page 6, line 29, page 8, lines 13-19, claims * | 1,5,12, 13,16,17 | INV. C09K11/08 C09K11/77 B42D15/00 |
| X | EP 1 284 322 A1 (BANQUE DE FRANCE [FR]) 19 February 2003 (2003-02-19) * column 1, lines 35-40, column 3, lines 3-8 and lines 29-35 * | 1,5,12, 13 | |
| D,A | US 6 841 092 B2 (PAESCHKE MANFRED [DE] ET AL) 11 January 2005 (2005-01-11) * the whole document * | 1-20 | |
| A | WO 03/072682 A (HONEYWELL SPECIALITY CHEMICALS [DE]; BLEY BIANCA [DE]; FISCHBECK UWE []) 4 September 2003 (2003-09-04) * the whole document * | 1-20 | |

TECHNICAL FIELDS SEARCHED (IPC)

C09K
B42D

The present search report has been drawn up for all claims

| Place of search | Date of completion of the search | Examiner |
|---|---|---|
| Munich | 14 December 2006 | Nemes, Csaba |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 8084

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2006

| Patent document cited in search report | | Publication date | Patent family member(s) | | Publication date |
|---|---|---|---|---|---|
| WO 9839392 | A | 11-09-1998 | AT | 310778 T | 15-12-2005 |
| | | | AU | 6727998 A | 22-09-1998 |
| | | | CA | 2283345 A1 | 11-09-1998 |
| | | | DE | 59813225 D1 | 29-12-2005 |
| | | | EP | 0966504 A1 | 29-12-1999 |
| | | | JP | 2001513840 T | 04-09-2001 |
| | | | US | 6802992 B1 | 12-10-2004 |
| EP 1284322 | A1 | 19-02-2003 | AT | 322576 T | 15-04-2006 |
| | | | DE | 60210378 T2 | 19-10-2006 |
| | | | DK | 1284322 T3 | 29-05-2006 |
| | | | ES | 2257519 T3 | 01-08-2006 |
| | | | FR | 2828698 A1 | 21-02-2003 |
| | | | MA | 25711 A1 | 01-04-2003 |
| | | | MD | 2403 B1 | 31-03-2004 |
| | | | OA | 12478 A | 24-05-2006 |
| | | | PT | 1284322 T | 31-05-2006 |
| US 6841092 | B2 | 11-01-2005 | DE | 10113267 A1 | 19-09-2002 |
| | | | EP | 1241242 A2 | 18-09-2002 |
| | | | US | 2002130304 A1 | 19-09-2002 |
| WO 03072682 | A | 04-09-2003 | AU | 2002361414 A1 | 09-09-2003 |
| | | | CA | 2443847 A1 | 04-09-2003 |
| | | | CN | 1524117 A | 25-08-2004 |
| | | | DE | 10208397 A1 | 11-09-2003 |
| | | | EP | 1478715 A1 | 24-11-2004 |
| | | | JP | 2005518475 T | 23-06-2005 |
| | | | US | 2005205846 A1 | 22-09-2005 |

EPO FORM P0459

For more details about this annex : see Official Journal of the European Patent Office, No. 12/82

**EP 1 760 134 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050014283 A
- US 6312914 B
- US 6841092 B
- US 20040227694 A
- US 20040232826 A